(19) Europäisches Patentamt
European Patent Office
Office européen des brevets

(11) **EP 4 675 306 A1**

(12) **EUROPEAN PATENT APPLICATION**

(43) Date of publication:
**07.01.2026 Bulletin 2026/02**

(21) Application number: **25184440.3**

(22) Date of filing: **23.06.2025**

(51) International Patent Classification (IPC):
**G01S 7/35** (2006.01)       **G01S 13/34** (2006.01)
**G01S 13/58** (2006.01)      **G01S 13/931** (2020.01)

(52) Cooperative Patent Classification (CPC):
**G01S 13/341; G01S 7/023; G01S 7/354;**
**G01S 13/584; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.07.2024 US 202418762029**

(71) Applicant: **NXP B.V.**
**5656 AG Eindhoven (NL)**

(72) Inventor: **BURY, Andreas Gerhard**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **NON-LINEAR CHIRP SIGNAL TO MITIGATE SIGNAL-TO-NOISE RATIO REDUCTION IN FMCW RADAR**

(57) A radar system employs one or more radar sensors to obtain a sensing result (i.e., information about at least one object). The one or more radar sensors generate and transmit one or more chirp signals and in response to receiving the reflected chirp signal determine the sensing result. The radar system includes one or more radar sensors that employ a non-linear long chirp signal with a logarithmic phase.

100

**FIG. 1**

**Description**

BACKGROUND

In order to obtain a sensing result, a frequency modulated continuous wave (FMCW) radar system generates a chirp signal that is transmitted from a transmitter antenna on the radar system. Upon reaching an object, the chirp signal is reflected from the object and the reflected chirp signal is detected by a receiver antenna on the radar system. After receiving the reflected chirp signal, the radar system processes the reflected chirp signal to determine the sensing result (e.g., information about the object), such as location, distance, and velocity. Depending on the configuration of the radar system, the system transmits one or more chirp signals per radar frame. Each radar frame is one or more chirp signals transmitted within a frequency sweep over a given period of time. Brief Description of the Drawings

The present disclosure may be better understood, and its numerous features and advantages made apparent to those skilled in the art by referencing the accompanying drawings. The use of the same reference symbols in different drawings indicates similar or identical items.

FIG. 1 is a block diagram of a radar sensor in accordance with some embodiments.

FIG. 2 is a block diagram of a chirp generator in accordance with some embodiments.

FIG. 3 is a block diagram of a chirp generator in accordance with some embodiments.

FIG. 4 is a block diagram of a sample extractor in accordance with some embodiments.

FIG. 5 is a block diagram of a sample extractor in accordance with some embodiments.

FIG. 6 is a chart of a comparison between a non-linear chirp signal and a linear chirp signal having an upslope in accordance with some embodiments.

FIG. 7 is a chart of a comparison of sampling frequency over time for a non-linear chirp signal and a linear chirp signal having an upslope in accordance with some embodiments.

FIG. 8 is a set of range-FFT charts, showing the fast Fourier transform computed from a sampled sensing signal, plotted as absolute values, of samples based a linear chirp signal and based on a non-linear chirp signal, and as received from multiple targets in accordance with some embodiments.

FIG. 9 is a chart of a comparison between a non-linear chirp signal and a linear chirp signal having a downslope in accordance with some embodiments.

FIG. 10 is a chart of a comparison of sampling frequency over time for a non-linear chirp signal and a linear chirp signal having a downslope in accordance with some embodiments.

FIG. 11 is a flow diagram of a method for generating a non-linear long chirp signal and extracting a sampled signal from a received non-linear long chirp signal in accordance with some embodiments.

DETAILED DESCRIPTION

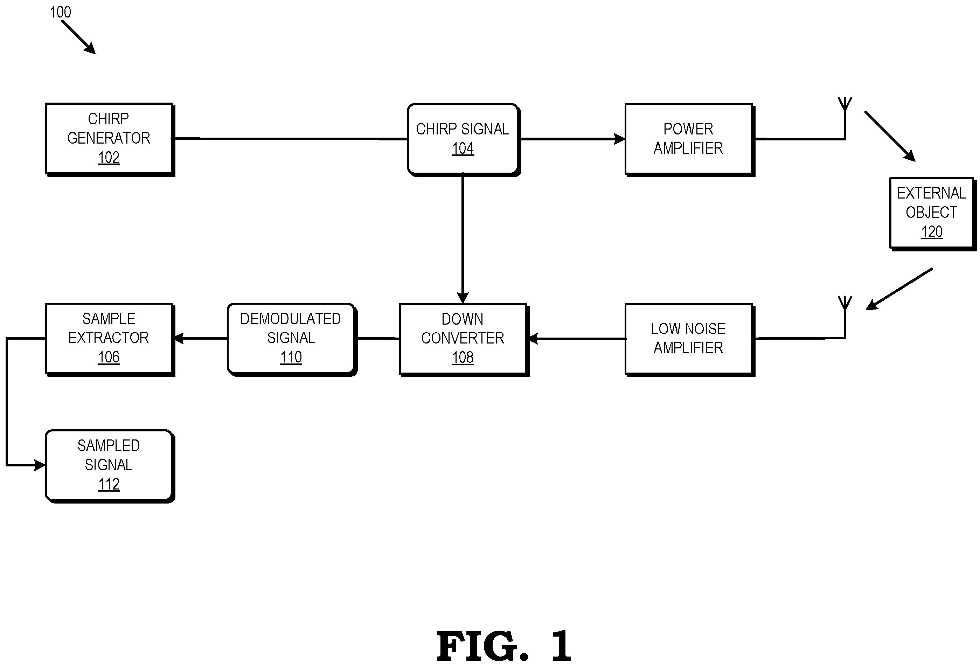

FIGs. 1-11 illustrate systems and techniques for generating a non-linear long chirp signal in a radar sensor and sampling the non-linear long chirp signal that is reflected from at least one object. A radar system employs one or more radar sensors to obtain a sensing result (i.e., information about at least one object). The one or more radar sensors generate and transmit one or more chirp signals and in response to receiving the reflected chirp signal determine the sensing result. However, transmitting one or more chirp signals for a radar frame increases a likelihood of interference as an increased number of chirp signals results in an increase in, for example, signal collision with other chirp signals. Specifically, each additional chirp signal increases a likelihood of interference that reduces resolution (i.e., clarity) of the sensing result and thus impacts effectiveness of the one or more radar sensors. Similarly, each additional radar sensor, in a radar system having multiple radar sensors, sending chirp signals also increases the likelihood of interference. To improve interference avoidance and increase detection ability of the radar system, the techniques disclosed herein include radar systems having one or more radar sensors that employ a non-linear long chirp signal. For example, in some embodiments, the one or more radar sensors employ a single, non-linear long chirp signal over a duration that would typically be used for multiple chirp signal radar frames, and still obtain the sensing result. Assuming that all radars operating in a certain frequency band use long chirps with identical shape and start frequency, the long chirp signals avoid interference as long as each radar sends its chirps with sufficient time offset from the chirps of other radars. As such, the non-linear long chirp signal conserves time and bandwidth resources while supporting interference avoidance.

To illustrate, in a conventional application of a linear long chirp signal by the one or more radar sensors, one aspect of the linear long chirp is a phase value is determined quadratically over time. That is, the phase is a position of the chirp signal at a point in time and is represented as a wave or a periodic function. Another aspect of the linear long chirp signal is that it suffers from loss of signal-to-noise ratio (SNR) for fast moving objects, as well as blurring of high-speed objects, which reduces the resolution of the sensing result and obscures stationary or slower moving objects. For example, high speed movement of an object corresponds to rapid change in location over the duration of the linear long chirp signal. The reflected signal received by the one or more sensors is demodulated and a beat frequency (i.e., a difference in frequency between the chirp signal that was received and the transmitted chirp signal that is used for downconversion) that is identified and is used to determine the distance from the one or more sensors that transmitted the chirp signal to the object. The beat frequency also changes over the duration of the transmitted chirp signal. Since the beat frequency changes, the sensing result is not focused to one location, which reduces the resolution of the sensing result.

For example, a first radar frame includes a first set of chirp signals between 40 gigahertz (GHz) to 50 GHz between 0 to 10 milliseconds (ms). A second radar frame includes a second set of chirp signals between 50 GHz to 60 GHz between 20 ms to 30 ms. Thus, for each radar frame, the radar system sends the one or more chirp signals in a frequency sweep within a predefined period of time. Typically, the radar system is configured to use either short, multiple chirp signal radar frames or single, linear long chirp signal radar frames. Short, multiple chirp signal radar frames are radar frames that have one or more chirp signals. Each chirp signal in the radar frame has a short duration (e.g., $25\mu s$, $50\mu s$) and a steep slope (e.g., faster change in frequency in the frequency sweep over the duration). Conversely, single, linear long chirp signal radar frames are radar frames comprised of a single chirp signal. However, unlike short, multiple chirp signals, the linear long chirp signals have a longer duration (e.g., 10 ms) and longer slope (e.g., relatively slower change in frequency in the frequency sweep over the duration). However, each of the above-described approaches has some drawbacks. For multiple chirp signal radar frames, the radar system coordinates the frequency and timing parameters to mitigate interference (i.e., interference avoidance) between the radar frames. Interference of radar signals occurs in response to, for example, other radar signals. However, the frequency range and the period of time for the frequency sweep is limited, and thus, the mitigating interference for multiple chirp signal radar frames is limited.

In the case of linear long chirp signals, each chirp spans a longer period of time than the short, multiple chirp signals. In particular, linear long chirp signals use a larger bandwidth around the chirp signal for sensing according to desired distance for detecting objects. As long as the bandwidth around the chirp signal is large enough, then additional linear long chirp signals will not interfere. Accordingly, the linear long chirp signals of identical slope support self-contained interference avoidance. However, systems employing linear long chirp signals have difficulty detecting a high-speed moving object. Due to the high speed of the object, during detection, the energy from the reflected signal is spread out over multiple range bins (i.e., received signals that are sorted based on arrival time). As a result of the wider spread, other nearby objects that returned the reflected signal may be masked (i.e., hidden) in the results, thereby reducing the resolution in presence of high-speed moving objects. Furthermore, the signal-to-noise ratio is reduced, which limits the detection range of the radar for the high-speed object.

**In** contrast to these conventional approaches, using the techniques described herein, the non-linear long chirp signal changes in frequency non-linearly over time and has a phase that is changed logarithmically over time. Unlike a phase that changes quadratically over time, a logarithmic phase has less fluctuations (e.g., less changes in position on the wave of the signal). Therefore, the logarithmic phase improves resolution of the beat frequency. Moreover, the non-linear long chirp signal identifies (i.e., gives full resolution of) all objects that reflect the chirp signal while maintaining full SNR, regardless of speed of each object.

Using the techniques described herein, the one or more radar sensors employ non-equidistant sampling of the demodulated signal. That is, the one or more radar sensors sample (e.g., determine the sensing result of) the reflected signal from the at least one object at varying sample times. The varying sample times are calculated based on a sampling clock. To provide a relatively accurate approximation of the non-linear long chirp signal, the one or more radar sensors extract the sampled signals from the demodulated signal by employing a clock timer that adjusts a sampling frequency at the same rate of change to a slope of the non-linear long chirp signal. Stated differently, the sampled frequency of the one or more radar sensors changes at the same rate as the slope of the non-linear long chirp signal changes. As such, the sampled signals do not lose SNR based on the change of the slope of the non-linear long chirp, such that the slope changes in frequency over time. Therefore, assuming that all radars operating in a certain frequency band make use of the same signal shape, this non-linear long chirp signal supports interference avoidance while offering full resolution of the sensing result for a substantial portion (e.g., more than 99%) of the time of operation of the radar system.

FIG. 1 illustrates a block diagram of a radar sensor 100 to be used in a radar system (not shown). In the depicted example, only one radar sensor 100 is shown. It will be appreciated that in different embodiments, there are a plurality of radar sensors 100 in the radar system. In some embodiments, the radar sensor 100 is included in a motor vehicle (not shown). That is, the radar sensor 100 performs different radar operations to detect surroundings of the motor vehicle, including generation of radar signals, detection of reflected radar signals, identification of objects and object characteristics, and the like. For example, the radar sensor 100 is used to detect objects, people, other motor vehicles, and the like. However, in different embodiments, the radar sensor 100 is included in the radar system for military use, aircraft navigation, ship navigation, and the like. In some embodiments, the radar sensor 100 includes a chirp generator 102, a sample extractor 106, and a down-converter 108.

The chirp generator 102 generates a chirp signal 104 to be transmitted from a transmitter antenna. Specifically, the chirp generator 102 generates a non-linear long chirp signal 104. For ease of description and understanding, the non-linear long chirp signal 104 will hereinafter be referred to as the non-linear chirp 104. The non-linear chirp 104 changes in frequency non-linearly over time. Moreover, the non-linear chirp 104 has a longer duration than multiple, short chirp signals, and a longer slope. That is, the non-linear chirp 104 has a duration of at least 10 ms. The non-linear chirp 104 is generated based on a start frequency ($f_0$), a stop frequency ($f_1$), and a duration (T). The duration is characterized by a start time ($t_0$) and an end time ($t_1$). The start time is determined by the following:

$$t_0 = T*(f_1/(f_0-f_1))$$

and the end time is determined by:

$$t_1 = t_0 + T$$

Thus, the duration identifies a period of time for how long the non-linear chirp 104 is transmitted. For example, in some embodiments, the chirp generator 102 generates the non-linear chirp 104 over 10 milliseconds (ms) while varying a frequency between 77 gigahertz (GHz) and 81 GHz. Accordingly, the bandwidth of the non-linear chirp 104 is 4 GHz. In some embodiments, the frequency of the non-linear chirp 104 changes reciprocally with time which is defined by

$$f(t) = f_0*(t_0/t)$$

A time-varying slope of the non-linear chirp 104 represents a rate of change of the frequency (e.g., frequency sweep) within the duration of the non-linear chirp 104. In other words, the time-varying slope of the non-linear chirp 104 indicates, for example, the change from 81 GHz to 77GHz. The time-varying slope is determined by

$$\beta(t) = f(t)/-t = \int\beta(t)dt/-t = f_0*t_0/-t^2$$

Furthermore, a phase of the non-linear chirp 104 changes logarithmically over time which is defined by

$$\varphi(t) = 2\pi*t_0*f_0*\log(t/t_0)$$

In some embodiments, the radar sensor 100 includes a power amplifier. The power amplifier increases a power of the non-linear chirp 104 prior to transmission from the transmitter antenna to improve likelihood of the non-linear chirp 104 reaching an external object 120 (or any other object, person) as well as increasing likelihood of reflection of a reflected non-linear chirp from the external object 120 due to overall signal attenuation and interference based on, for example, subsequent non-linear chirps 104 from the chirp generator 102, prior non-linear chirps from the chirp generator 104 that are already reflected, signals (e.g., other chirp signals) from other radar systems, and the like. Additionally, in some embodiments, the radar sensor 100 includes a low noise amplifier. The low noise amplifier increases a power level of the reflected non-linear chirp received by a receiver antenna to facilitate further processing by the radar sensor to determine information (if any) in the reflected non-linear chirp. The reflected non-linear chirp is sent to the down-converter 108. The down-converter 108 down converts a combination of the reflected non-linear chirp and the non-linear chirp 104 that was originally transmitted to generate a demodulated signal 110.

Subsequently, the down-converter 108 sends the demodulated signal 110 to the sample extractor 106 to extract one or more sampled signal 112 from the demodulated signal 110. The sample extractor 106 employs non-equidistant sampling of the demodulated signal 110. In other words, the sample extractor 106 samples at varying times, the demodulated signal 110 to identify information within the demodulated signal 110, such as location, distance, and velocity of the external object 120 and/or any other object that reflects the non-linear chirp 104. Accordingly, the sample extractor 106 generates the one or more sampled signal 112, which are also referred to as a sensing result. N samples of the non-linear chirp 104 that are defined as

$$N = [2*\tau_{max}*|f_1 - f_0|]$$

where $\tau_{max}$ represents the largest time delay before the sample extractor 106 samples the demodulated signal 110. Time delay is included in the calculation to account for the time between transmission of the non-linear chirp 104 and receipt of the reflected non-linear chirp. In order to collect the samples, the sample extractor 106 uses a sample index defined as

$$n \, \varepsilon \, \{\mathbb{Z} \, | \, 0 \leq n < N\}$$ . The sample extractor 106 has a time-varying sampling frequency, which is defined as

$$f_s(t) = 2*\tau_{max}*(f_0*|t_0|/-t^2)$$

Note that the sampling frequency samples at the same rate of change as the time-varying slope. Stated differently, the sample extractor 106 samples the demodulated signal 110 based on the respective instantaneous slope of the non-linear chirp 104.

To determine the demodulated signal 112 for a single target moving at a constant velocity, the sample extractor 106 derives a rotation count over the sample index as described above. The rotation count of the demodulated signal 112 determines the change in sampling by the sample extractor 106 over time. The non-linear chirp 104 received at the down-converter 108 is defined by $S_{TX}(t) = e^{j2\pi*t0*f0*\log(t/t0)}$. The reflected non-linear chirp is defined by $S_{RX}(t) = \alpha*e^{j2\pi*t0*f0*\log((t-\tau(t))/t0)}$. $\tau(t)$ represents a time-dependent delay and $\alpha$ represents amplitude. Specifically, the time-dependent delay accounts for propagation delay based on time from transmission of the non-linear chirp 104 to return of the reflected non-linear chirp after encountering, for example, the external object 120. The rotation count r(t) is defined by $r(t) = t_0*f_0*\log(t-\tau(t)/t0)$. Accordingly, the demodulated signal 110 is determined by $S_{TX}(t) * S_{RX}(t) = \alpha*e^{j2\pi*r(t)}$. The time dependent delay includes a base delay defined as $\tau(t) = \tau_1 + 2*(v/c)*(t-ti)$, where v represents velocity and c represents the speed of light constant. Accordingly, the sample times used by the sample extractor 106 are defined by $t = t_0*(1/(1+sgn(f_1-f_0)*n/(2*\tau_{max}*f_0)))$. The rotation count is defined by $r(n) \approx -\tau_1*f_1 + ((N-n)/N)*\tau_1*(f_1-f_0) + ((N-n)/n)*2*(v/c)*T*f_0$ where $((N-n)/N)*\tau_1*(f_1-f_0)$ identifies a distance range bin (e.g., a distance determined based on an arrival time of the reflected non-linear chirp) and $((N-n)/n)*2(v/c)*T*f_0$ identifies a velocity-induced range bin offset. Accordingly, the velocity-induced range bin offset is used to account for movement of the object, if any.

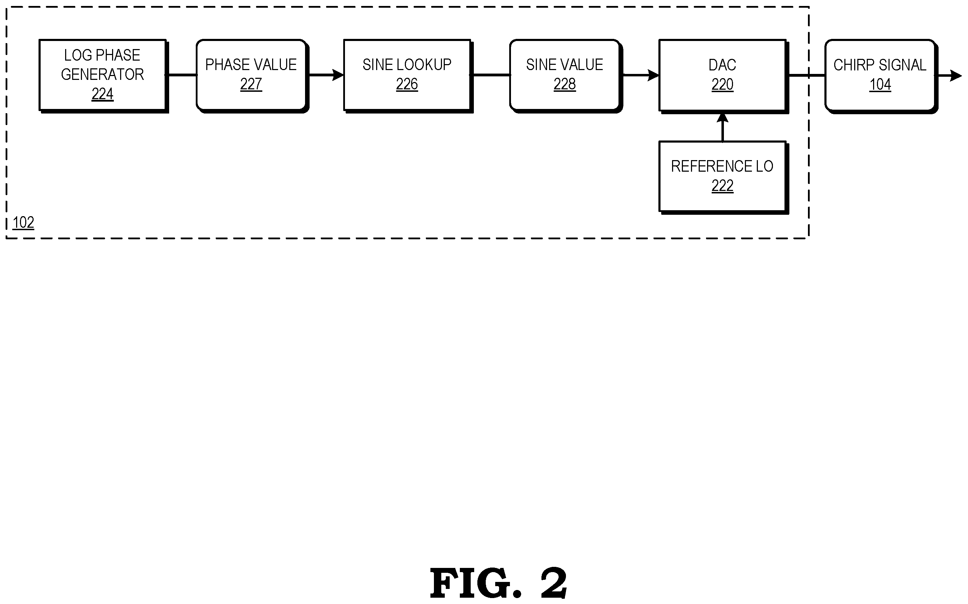

FIG. 2 illustrates a block diagram of the chirp generator 102 in accordance with some embodiments. In some embodiments, the chirp generator 102 includes a digital-to-analog converter (DAC) 220, a reference local oscillator (LO) 222, a log phase generator 224, and a sine lookup 226. The DAC 220 generates the non-linear chirp 104 in response to receiving an oscillating signal (e.g., a sine wave) with a constant frequency from the reference LO 222 and the sine lookup 226. The reference LO 222 provides a high frequency sample clock as a reference clock for the digital-to-analog-converter 220.

In some embodiments, the chirp generator 102 employs the log phase generator 224 to generate a phase value 227 to the non-linear chirp 104. Specifically, the log phase generator 224 logarithmically changes (e.g., increases) the phase of the non-linear chirp 104 over time. In the conventional setup, for short, multiple chirp signals, or in the case of a linear long chirp signal, the phase increases quadratically over time. It will be appreciated that in order to provide the increased precision of phase control, the sample extractor 106 employs the reference LO 222 for sample timing. Furthermore, the phase value 227 is received by the sine lookup 226. The sine lookup 226 generates a sine value 228 on the phase value 227. In particular, the sine lookup 226 generates a logarithmic chirp, according to the time-dependent phase delivered by the log phase generator. As a result, the DAC 220 outputs the non-linear chirp 104, which is a chirp whose phase has a logarithmic dependency of time.

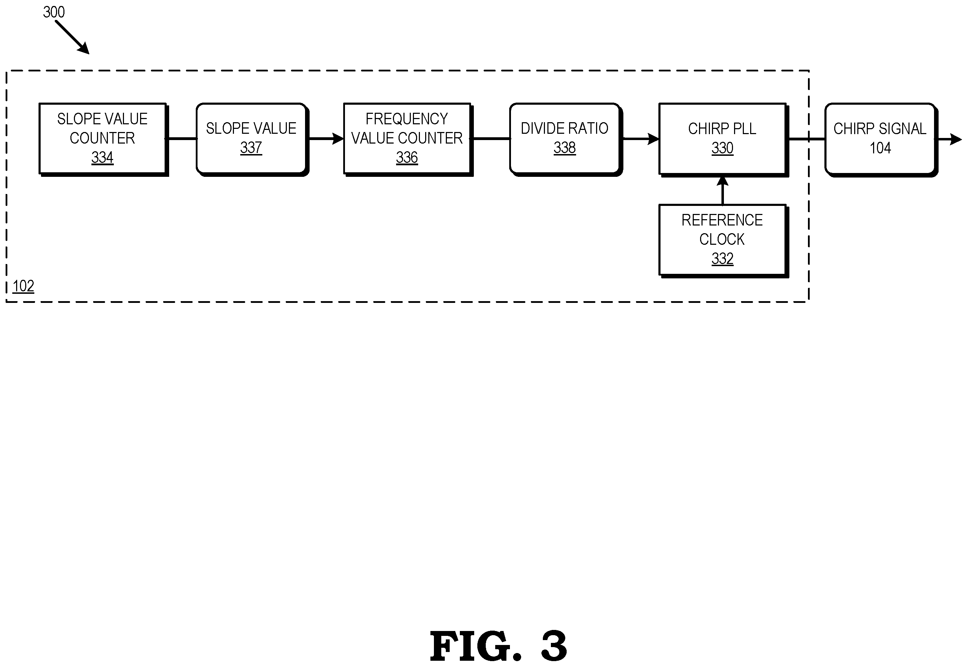

FIG. 3 illustrates a block diagram of the chirp generator 102 in accordance with some embodiments. In some embodiments, the chirp generator 102 includes a chirp phase locked loop (PLL) 330, a reference clock 332, a slope value counter 334, and a frequency value counter 336. The chirp PLL 330 generates the non-linear chirp 104 in response to receiving a clock signal from the reference clock 332 and the frequency value counter 336. The reference clock 332 controls the chirp PLL 330 by sending a constant clock frequency.

In some embodiments, the chirp generator 102 employs the slope value counter 334 to generate a slope value 337 to the non-linear chirp 104. Specifically, the slope value counter 334 changes (e.g., increases for an up-chirp or decreases for a down-chirp) the slope value 337 of the non-linear chirp 104 over time. That is, the slope value counter 334 adjusts the frequency of the non-linear chirp 104. Subsequently, the slope value 337 is received by the frequency value counter 336. The frequency value counter 336 generates a divide ratio 338. The divide ratio 338 is adjusted in a reciprocal manner. Specifically, the divide ratio 338 changes reciprocally with time and therefore, the frequency value counter 336 generates a chirp with frequency changing reciprocally with time, corresponding to a phase changing logarithmic with time. Moreover, the frequency value counter 336 counts up (e.g., for an up-chirp) or counts down (e.g., for a down-chirp). In this manner, based on the divide ratio 338 from the frequency value counter 336, the chirp PLL 330 generates the non-linear chirp 104 with a frequency that is equivalent to the reference clock 332 multiplied by the divide ratio 338. As a result, the chirp PLL 330 outputs the non-linear chirp 104, which is a logarithmic chirp and is timed according to the reference clock 332.

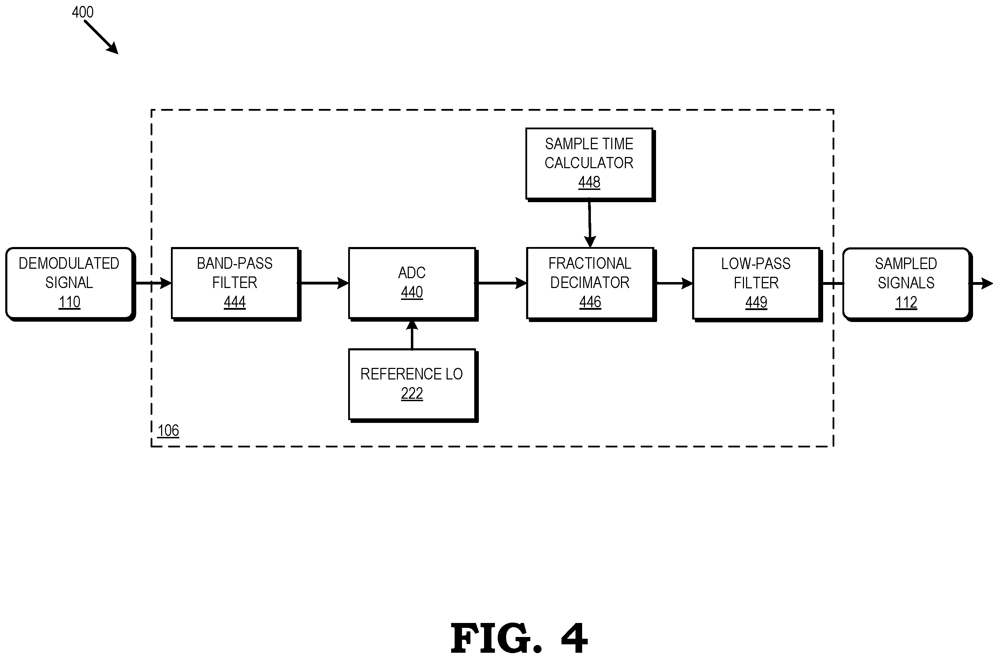

FIG. 4 illustrates a block diagram of the sample extractor 106 in accordance with some embodiments. In some embodiments, the sample extractor 106 includes an analog-to-digital converter (ADC) 440, the reference LO 222, a band-pass filter 444, a fractional decimator 446, a sample time calculator 448, and a low-pass filter 449. The ADC 440 converts received analog signals (e.g., radio waves), such as the demodulated signal 110 to digital form. The band-pass filter 444 receives the demodulated signal 110 and restricts at least a portion of the demodulated signal 110 to a threshold frequency range. Specifically, the band-pass filter 444 limits the demodulated signal 110 within a frequency range between a high frequency threshold and a low frequency threshold, such that the low frequency threshold is less than the high frequency threshold. The band-pass filter 444 sends the demodulated signal 110 within the frequency range to the ADC 440. The ADC 440 operates at a sample rate based on the signal provided by the reference LO 222.

In some embodiments, the sample extractor 106 employs the fractional decimator 446 (a.k.a., a fractional decimation filter 446) to determine output samples (e.g., sampled signal 112) based on a sampling time. The sampling time is a moment of time at which the sample extractor 106 generates the sampled signal 112. By varying the sample time, the sample extractor 106 employs non-equidistant sampling. As a result, as the frequency increases per sample time, the time between samples decreases. Thus, the sample extractor 106 samples at the same rate as a change in slope of the non-linear chirp 104. Moreover, the fractional decimator 446 requests sample times from the sample time calculator 448. Stated differently, the sample time calculator 448 determines the sample times from which the fractional decimator 446 determines the output samples. As a result, the sample times vary over time. Furthermore, the sample time calculator 448 determines the sample times based on a variation of the slope of the non-linear chip 104. In other words, the sampled signal 112 is determined by the fractional decimator 446 by varying the sampling frequency that corresponds to a change in the slope of the non-linear chirp 104. The fractional decimator 446 sends the sampled signal 112 through the low-pass filter 449 to limit the sampled signal 112 to a consistent range and prevent aliasing (i.e., attenuation of signal with a frequency beyond a limit of the sampling theorem). That is, the low-pass filter 449 restricts the sampled signal 112 to a maximum beat frequency. In this manner, based on the sample time calculator 448, sampled signal 112 are output from the fractional decimator 446 using the time varying sampling frequency. The sampled signal 112 are transmitted to a memory device (not shown) (e.g., a hard disk drive, a solid state drive (SSD), a flash memory, a non-volatile memory device, and the like) for storage and further processing, such as, for example, Fast Fourier Transform (FFT) to extract a beat frequency.

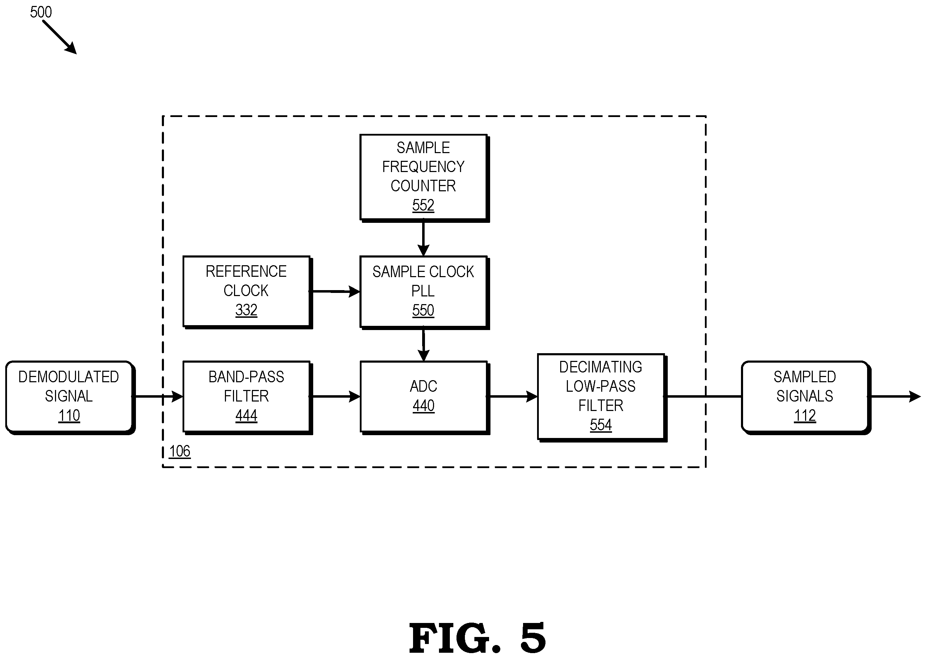

FIG. 5 illustrates a block diagram of the sample extractor 106 in accordance with some embodiments. In some embodiments, the sample extractor 106 includes the ADC 440, the band-pass filter 444, a sample clock PLL 550, a sample frequency counter 552, and a decimating low-pass filter 554. The ADC 440 converts received analog signals (e.g., radio waves), such as the demodulated signal 110 to digital form. The band-pass filter 444 receives the demodulated signal 110 and restricts at least a portion of the demodulated signal 110 to a threshold frequency range. Specifically, the band-pass filter 444 limits the demodulated signal 110 within a frequency range between a high frequency threshold and a low frequency threshold, such that the low frequency threshold is less than the high frequency threshold. The band-pass filter 444 sends the demodulated signal 110 within the frequency range to the ADC 440. The ADC 440 operates at a varying time interval.

In some embodiments, the sample extractor 106 employs the sample clock PLL 550 to vary a clock rate for the ADC 440. Specifically, the sample clock PLL 550 receives a fixed frequency clock from the reference clock 332. In some embodiments, the reference clock 332 is the same reference clock 332 used for timing of the chirp PLL 330. In different embodiments, the reference clock 332 is a separate and different component. Moreover, the sample clock PLL 550 receives a divide ratio from the sample frequency counter 552. The sample frequency counter 552 changes the sampling frequency over time. In this manner, based on the divide ratio from the sample frequency counter 552, the sample extractor 106 outputs the sampled signal 112 with a frequency that is equivalent to the reference clock 332 multiplied by the divide ratio. As a result, the sample times vary over time. Furthermore, the ADC 440 sends the sampled signal 112 through the decimating low-pass filter 554 to limit the sampled signal 112 to a consistent range and prevent anti-aliasing. That is, the decimating low-pass filter 554 restricts the sampled signal 112 to a maximum beat frequency. Therefore, based on the sample clock PLL 550, the sampled signal 112 is output from the ADC 440 using the time varying sampling frequency. The sampled signal 112 are transmitted to a memory device (not shown) (e.g., a hard disk drive, a solid state drive (SSD), a flash memory, a non-volatile memory device, and the like) for storage and further processing, such as, for example, Fast Fourier Transform (FFT) to extract a beat frequency.

In some embodiments, the sample extractor 106 performs post processing of the sampled signal 112. In different embodiments, a processing device, such as central processing units (CPUs), graphics processing units (GPUs), application-specific integrated circuits (ASICs), field programmable gate arrays (FPGAs), and the like. The sample extractor 106 delivers the sampled signal 112. To illustrate, the sample extractor 106 delivers the sampled signal 112 to the memory device.

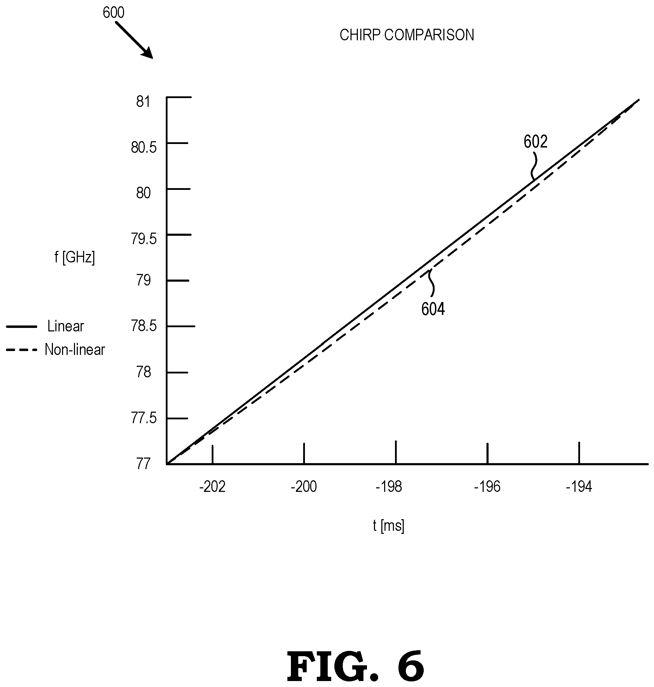

FIG. 6 illustrates a chart 600 of a comparison between the non-linear chirp 104 and a linear chirp signal in accordance with some embodiments. **In** the depicted example, the linear chirp signal 602 has a linear progression over time between 77 GHz to 81 GHz. The linear chirp signal has an upslope (that is, the sampling frequency increases over time from a relatively low initial frequency). The non-linear chirp signal 604 also has an upslope, but has relatively less linear (e.g., non-linear) progression over time between 77 GHz to 81 GHz. Specifically, the non-linear chirp signal 604 deviates from the linear chirp most noticeably between 198 ms and 195 ms. It will be appreciated that the difference between the non-linear chirp signal 604 and the linear chirp signal 602 is relatively large, for visual clarity of the figure, and that in some embodiments the difference between the signals is less than in the depicted example.

In some embodiments, the chip generator 102 is configured to approximate the non-linear slope for the chirp signal 104. For example, in at least one embodiment, the chirp generator 102 includes a number of samples for the chirp signal according to the following equation:

$$N = 2 \cdot \tau_{max} \cdot |f_1 - f_0|$$

where $\tau_{max}$ is the largest propagation delay related to a reflecting object at the farthest distance supported by the radar, N is the number of samples, $f_0$ is the start frequency, and $f_1$ is the stop frequency. The slope varying linearly with time is expressed as follows:

$$\beta(t) = \frac{\Delta F}{T}\left(R \cdot \left(\frac{t}{T} + \frac{1}{2}\right) + 1\right)$$

where

$$\Delta F = f_1 - f_0$$

and

$$R = \frac{f_1}{f_0} - \frac{f_0}{f_1}$$

and T is the chirp duration. The sampling frequency varies linearly with time as follows:

$$f_s(t) = 2 \cdot \tau_{max} \cdot \beta(t)$$

The sampling time instances follow the equation

$$t(n) = T \cdot \left(-Q + S \cdot \sqrt{Q^2 - \frac{2}{R} + \frac{n}{\tau_{max} \cdot |\Delta F| \cdot R}}\right)$$

with

$$n \in \{\mathbb{Z} \,|\, 0 \leq n < N\}$$

being the sample count and where

$$Q = \frac{1}{2} + \frac{1}{R}$$

This results in the radio frequency changing quadratically with time, as follows:

$$f(t) = f_1 + \Delta F \cdot \left(R \cdot \left(\frac{1}{2} \cdot \frac{t}{T} + \frac{1}{2}\right) + 1\right) \cdot \frac{t}{T}$$

and the phase changing as a third order polynomial with time, as follows:

$$\varphi(t) = 2\pi \cdot t \cdot \left[ f_1 + \frac{\Delta F}{2} \cdot \left( R \cdot \left( \frac{1}{3} \cdot \frac{t}{T} + \frac{1}{2} \right) + 1 \right) \cdot \frac{t}{T} \right]$$

This approximation results in relatively small signal-to-noise ratio (SNR) loss over the relevant parameter range. For example, for a start frequency of 77 GHz, and a stop frequency of 81 GHz, the SNR degradation is well under 0.1 dB across a chirp acquisition time from zero to 20 ms. In contrast, the SNR degradation for the linear chirp increases with chirp duration and velocity, from a low of 0 dB at 0 ms duration to over 12 db at 20 ms duration (assuming a velocity of 140 m/s).

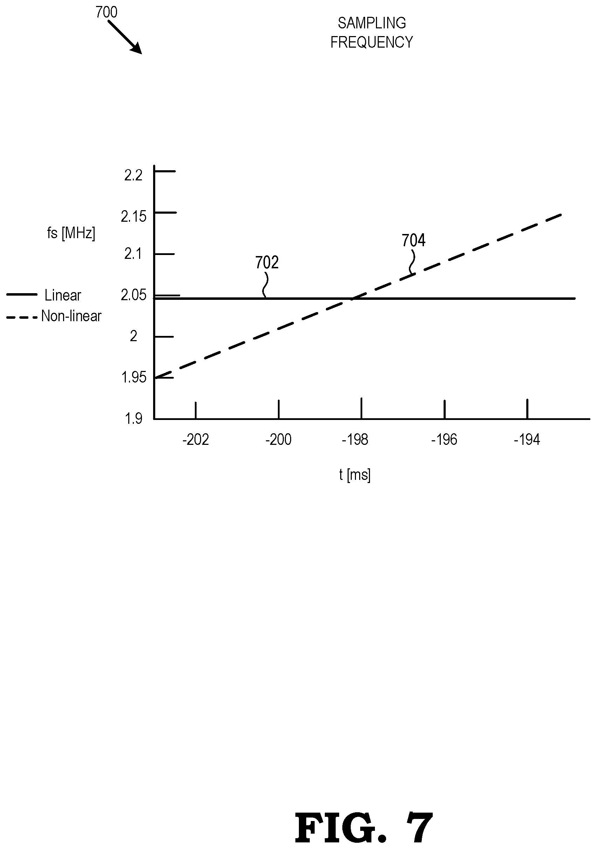

FIG. 7 is a chart 700 of a comparison of sampling frequency over time for the non-linear chirp 104 and a linear chirp signal in accordance with some embodiments, wherein the non-linear chirp has an upslope (that is, the sampling frequency increases over time from a relatively low initial frequency). In the depicted example, the linear chirp signal 702 has a constant slope that does not change over time. Conversely, the non-linear chirp signal 704 has a changing slope. As described above with reference to FIG. 4, the sampled signal 112 is determined by varying the sampling frequency that corresponds to a change in the slope of the non-linear chirp 104.

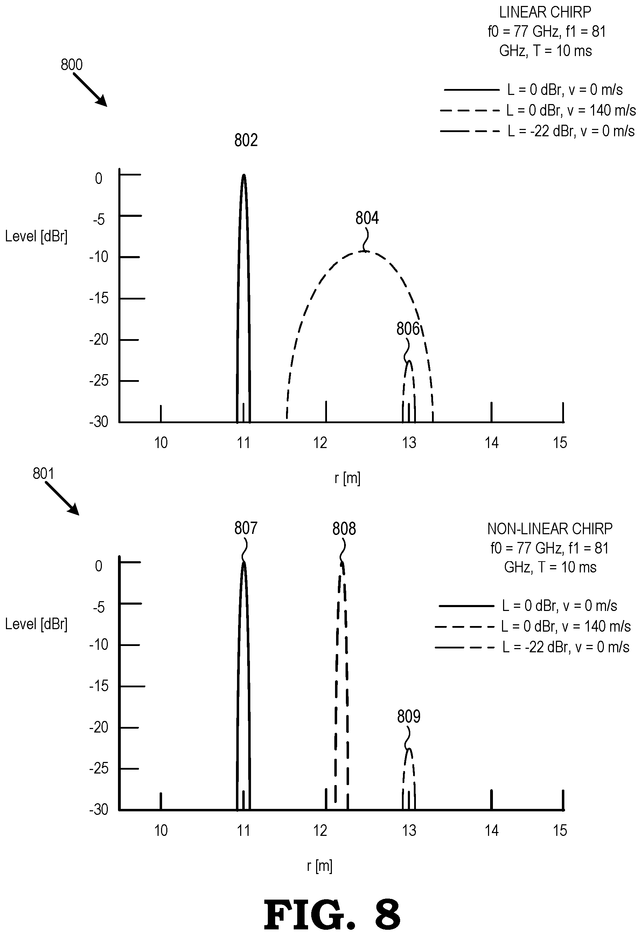

FIG. 8 is a set of two charts, designated chart 800 and chart 801 respectively. Chart 800 illustrates samples based on a linear chirp signal received from multiple targets in accordance with some embodiments, and in particular shows range FFT output after applying an FFT window. In the depicted example, a first target 802 is a non-moving target that shows no SNR loss (e.g., 0 dBr). A second target 804, is a fast moving target with SNR loss. In particular, target 804 shows a 10 dBr due to the rapid change in location of the second target. A third target 806 is obscured by the second target 804 because of range migration (e.g., the distance from the radar system 100 to the target is changing) based on movement of the second target 804. The reflected signal of the second target 804 is blurred due to distribution of the second target across multiple range bins, such that the third target 806 is hidden in the sensing result.

Chart 801 illustrates samples based the non-linear chirp 104 received from multiple targets in accordance with some embodiments, and in particular shows a range FFT output after applying an FFT window. In the depicted example, a first target 807 is a non-moving target that shows no SNR loss (e.g., 0 dBr). A second target 808 is a fast moving target. In contrast to the target 804, the target 808 has no SNR loss based on the parameters (e.g., frequency, duration) and despite the high speed of the target. That is, the signal received from target 804 is distributed across multiple range bins. However, the non-linear chirp 104 prevents the SNR loss. Lastly, a third target 809 is a non-moving target and smaller target with respect to the first target 807 and the second target 808. Accordingly, the third target 809 reflects less of the non-linear chip 104 resulting in smaller reflected signal. However, as shown in the chart 801, the non-linear chirp 104 eliminates the blurring of the third target 809, in contrast to the target 806 of chart 800.

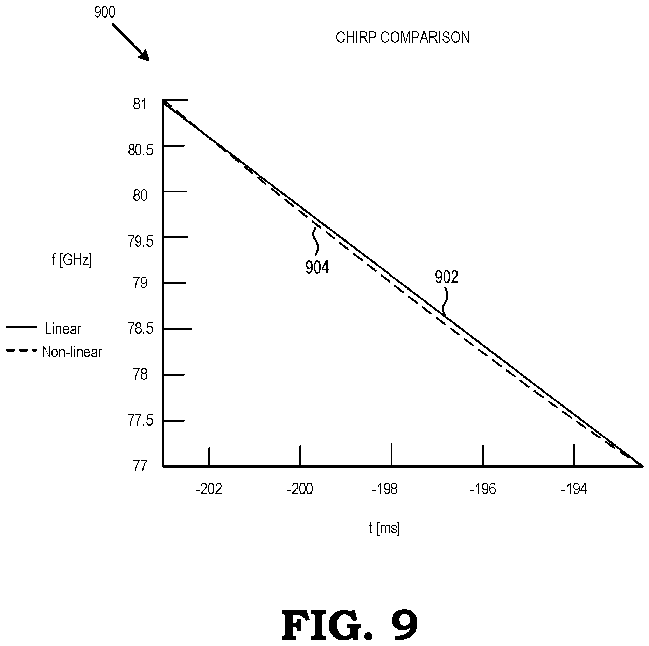

FIG. 9 illustrates a chart 900 of a comparison between the non-linear chirp 104 and a linear chirp signal in accordance with some embodiments. In the depicted example, the linear chirp signal 902 has a linear progression over time between 77 GHz to 81 GHz. The linear chirp signal has a downslope (that is, the sampling frequency decreases over time from a relatively high initial frequency). The non-linear chirp signal 904 also has a downslope, but has relatively less linear (e.g., non-linear) progression over time between 77 GHz to 81 GHz. Specifically, the non-linear chirp signal 904 deviates from the linear chirp most noticeably between -198 ms and -195 ms.

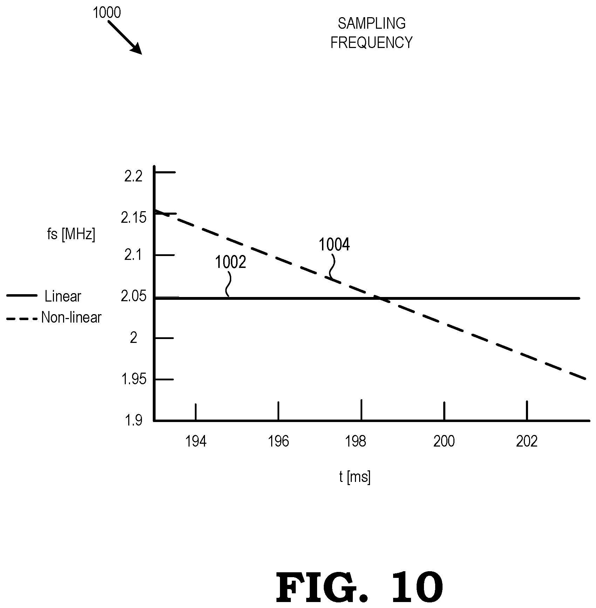

FIG. 10 is a chart 1000 of a comparison of sampling frequency over time for the non-linear chirp 104 and a linear chirp signal in accordance with some embodiments, wherein the non-linear chirp has a downslope (that is, the sampling frequency decreases over time from a relatively higher initial frequency). In the depicted example, the linear chirp signal 1002 has a constant slope that does not change over time. Conversely, the non-linear chirp signal 1004 has a changing slope.

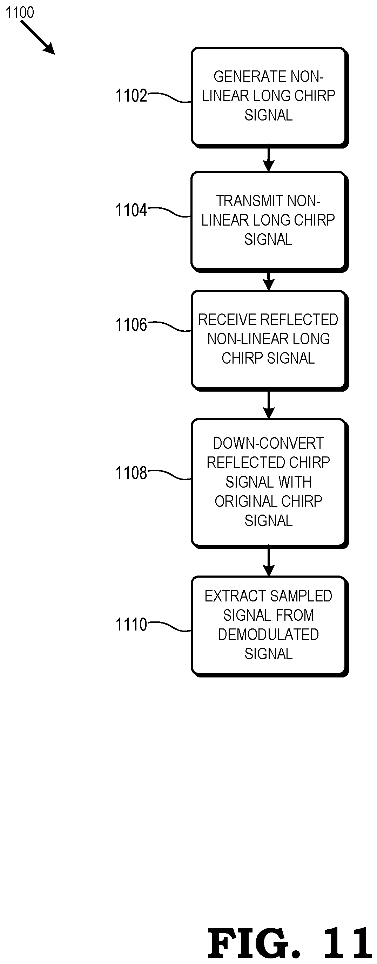

FIG. 11 is a flow diagram of a method 1100 for generating the non-linear chirp 104 and extracting the sampled signal 112 from the reflected non-linear chirp in accordance with some embodiments. The method 1100 is described with respect to an example implementation of the radar system 100 of FIG. 1. At block 1102, the chirp generator 102 generates the non-linear chirp 104. For example, in some embodiments, the chirp generator 102 employs the DAC 220 to generate the non-linear chirp 104 in response to the DAC 220 receiving an oscillating signal with a constant frequency from the reference LO 222 and the sine lookup 226. The reference LO 222 controls the DAC 220 by sending the oscillating signal. The log phase generator 224 generates a phase value 227 to the non-linear chirp 104, which logarithmically changes the phase of the non-linear chirp 104 over time. In different embodiments, the chirp generator 102 employs the chirp PLL 330 to generate the non-linear chirp 104 in response to receiving a clock signal from the reference clock 332 and the frequency value counter 336. The reference clock 332 controls the chirp PLL 330 by sending a constant clock frequency. As such, the chirp PLL 330 generates the non-linear chirp 104 determined by the reference clock 332. Moreover, the slope value counter 334 generates a slope value 337 to the non-linear chirp 104. The slope value counter 334 changes the slope value 337 of the non-linear chirp 104 over time. Subsequently, the frequency value counter 336 accumulates slope values to obtain a frequency value in the form of a divide ratio 338 employed by the chirp PLL 330 to generate the non-linear chirp 104 with a frequency that is equivalent to the reference clock 332 multiplied by the divide ratio 338. As a result, the chirp PLL 330 outputs the non-linear chirp 104 that is timed according to the reference clock 332.

At block 1104, the chirp generator 102 transmits the non-linear chirp by the transmitter antenna. At block 1106, the reflected non-linear chirp is received by the receiver antenna. At block 1108, the reflected non-linear chirp is sent to the down-converter 108. The down-converter 108 down converts the reflected non-linear chirp and the non-linear chirp 104 that was originally transmitted to generate the demodulated signal 110.

At block 1110, the sample extractor 106 extracts sampled signal 112 from the demodulated signal 110. For example, in some embodiments, the band-pass filter 444 receives the demodulated signal 110 and restricts at least a portion of the demodulated signal 110 to a threshold frequency range. The band-pass filter 444 sends the demodulated signal 110 within the frequency range to the ADC 440. Additionally, the fractional decimator 446 requests sample times from the sample time calculator 448. Furthermore, the sample time calculator 448 determines the sample times based on a variation of the slope of the non-linear chip 104. The fractional decimator 446 sends the sampled signal 112 through the low pass filter 449 to limit the sampled signal 112 to a consistent range. In this manner, based on the sample time calculator 448 sampled signal 112 are output from the fractional decimator 446 using the time varying sampling frequency. In different embodiments, the sample extractor 106 employs the sample clock PLL 550 to vary the clock rate for the ADC 440. Moreover, the sample clock PLL 550 receives the divide ratio from the sample frequency counter 552. The sample frequency counter 552 changes the sampling frequency over time. Therefore, based on the divide ratio from the sample frequency counter 552, the sample clock PLL 550 outputs the sampled signal 112 with a frequency that is equivalent to the reference clock 332 multiplied by the divide ratio. As a result, the sample times vary over time. Furthermore, the ADC 440 sends the sampled signal 112 through the decimating low pass filter 554 to limit the sampled signal 112 to a consistent range. Therefore, based on the sample clock PLL 550, the sampled signal 112 is output from the ADC 440 using the time varying sampling frequency.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1. A method, comprising:

   generating, at a radar system, a non-linear chirp signal, wherein the non-linear chirp signal changes in frequency non-linearly over time;
   receiving, at the radar system, at least one reflected non-linear chirp signal; and
   determining a sensing result from at least one sampled signal based on the non-linear chirp signal and the at least one reflected non-linear chirp signal by varying a sampling frequency.

2. The method of claim 1, wherein generating the non-linear chirp signal comprises:
   generating the non-linear chirp signal including a non-linear slope.

3. The method of claim 1 or 2, wherein generating the non-linear chirp signal comprises:
   generating the non-linear chirp signal with a phase that changes logarithmically over time.

4. The method of any preceding claim, wherein the non-linear chirp signal is an approximation of a non-linear chirp signal.

5. The method of any preceding claim, wherein determining the sampled signal comprises:
   determining the sampled signal by varying the sampling frequency corresponding to a change in slope of the non-linear chirp signal.

6. The method of any preceding claim, wherein the chirp signal has a logarithmic phase.

7. The method of any preceding claim, wherein varying the sampling frequency comprises varying the sampling frequency such that a slope of the sampling frequency over time is $\beta(t) = f_0 * t_0 / -t^2$ wherein $f_0$ is an initial frequency and $t_0$ is a start time.

8. The method according to any preceding claim, wherein, comprising:
   the non-linear chirp signal is based on a constant clock frequency.

9. The method of any preceding claim, wherein generating the non-linear chirp signal comprises:
   generating the non-linear long chirp signal with a phase locked loop, PLL.

10. The method of claim 9, further comprising:

    generating, by a frequency value counter, a divide ratio to change a frequency of the non-linear chirp signal reciprocally with time; and
    receiving, by the PLL, the divide ratio to generate the non-linear chirp signal.

11. The method of claim 9 or 10, wherein the chirp signal increases in frequency over a duration of the non-linear chirp signal.

12. A radar system, comprising:

    a radar transmitter configured to generate a non-linear chirp signal based on a constant clock frequency, wherein the non-linear chirp signal changes in frequency non-linearly over time; and
    an analog-to-digital converter (ADC) configured to determine a sensing result from at least one sampled signal based on a demodulated signal and varying a sampling frequency over time.

13. The radar system of claim 12, further comprising:

    a sine lookup configured to generate a sine value to change a phase of the non-linear chirp signal; and
    a digital-to-analog converter, DAC, configured to generate the non-linear chirp signal in response to receiving the sine value.

14. The radar system of claim 12 or 13, further comprising:

a phase generator configured to generate the phase of the non-linear chirp signal, wherein the phase increases logarithmically over time.

15. The radar system of claim 12, 13 or 14, further comprising:
a fractional decimator configured to determine the sampled signal based on sample times corresponding to a change in slope of the non-linear long chirp signal.

FIG. 1

FIG. 2

FIG. 3

400

| DEMODULATED SIGNAL 110 | → | BAND-PASS FILTER 444 | → | ADC 440 | → | FRACTIONAL DECIMATOR 446 | → | LOW-PASS FILTER 449 | → | SAMPLED SIGNALS 112 |

SAMPLE TIME CALCULATOR 448

REFERENCE LO 222

106

# FIG. 4

**FIG. 5**

CHIRP COMPARISON

600

602

604

81
80.5
80
79.5
f [GHz]
79
78.5
—— Linear
– – – Non-linear
78
77.5
77

-202    -200    -198    -196    -194

t [ms]

# FIG. 6

FIG. 7

**FIG. 8**

CHIRP COMPARISON

# FIG. 9

1000

SAMPLING
FREQUENCY

fs [MHz]

—— Linear
- - - Non-linear

2.2
2.15
2.1
2.05
2
1.95
1.9

1002
1004

194    196    198    200    202

t [ms]

# FIG. 10

1100

```
              ┌──────────────────┐
              │  GENERATE NON-   │
1102          │ LINEAR LONG CHIRP│
              │      SIGNAL      │
              └──────────────────┘
                       │
                       ▼
              ┌──────────────────┐
              │  TRANSMIT NON-   │
1104          │ LINEAR LONG CHIRP│
              │      SIGNAL      │
              └──────────────────┘
                       │
                       ▼
              ┌──────────────────┐
              │ RECEIVE REFLECTED│
1106          │ NON-LINEAR LONG  │
              │   CHIRP SIGNAL   │
              └──────────────────┘
                       │
                       ▼
              ┌──────────────────┐
              │  DOWN-CONVERT    │
              │ REFLECTED CHIRP  │
1108          │  SIGNAL WITH     │
              │ ORIGINAL CHIRP   │
              │     SIGNAL       │
              └──────────────────┘
                       │
                       ▼
              ┌──────────────────┐
              │ EXTRACT SAMPLED  │
              │  SIGNAL FROM     │
1110          │  DEMODULATED     │
              │     SIGNAL       │
              └──────────────────┘
```

# FIG. 11

# EP 4 675 306 A1

| | Europäisches Patentamt<br>European Patent Office<br>Office européen des brevets | **EUROPEAN SEARCH REPORT** | **Application Number**<br>EP 25 18 4440 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHEIBLHOFER S ET AL: "Signal Model and Linearization for Nonlinear Chirps in FMCW radar SAW-ID Tag Request",<br>IEEE TRANSACTIONS ON MICROWAVE THEORY AND TECHNIQUES, IEEE, USA,<br>vol. 54, no. 4, 1 April 2006 (2006-04-01),<br>pages 1477-1483, XP001524363,<br>ISSN: 0018-9480, DOI:<br>10.1109/TMTT.2006.871361 | 1,2,4,5, 8-13,15 | INV.<br>G01S7/35<br>G01S13/34<br>G01S13/58<br>G01S13/931 |
| Y | * the whole document *<br>----- | 3,6,7,14 | |
| X | US 5 719 580 A (CORE MARK TAYLOR [US])<br>17 February 1998 (1998-02-17)<br>* column 5, line 7 - column 9, line 21;<br>figures 1,5 *<br>----- | 1,12 | |
| Y | ORDUYILMAZ ADNAN ET AL: "Real-time pulse compression radar waveform generation and digital matched filtering",<br>2015 IEEE RADAR CONFERENCE (RADARCON), IEEE,<br>10 May 2015 (2015-05-10), pages 426-431,<br>XP032788445,<br>DOI: 10.1109/RADAR.2015.7131037<br>[retrieved on 2015-06-22]<br>* the whole document *<br>----- | 3,6,7,14 | **TECHNICAL FIELDS SEARCHED (IPC)**<br><br>G01S |

The present search report has been drawn up for all claims

| Place of search | Date of completion of the search | Examiner |
|---|---|---|
| Munich | 13 November 2025 | Kern, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

23

## ANNEX TO THE EUROPEAN SEARCH REPORT
## ON EUROPEAN PATENT APPLICATION NO.

EP 25 18 4440

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | | Publication date | Patent family member(s) | | Publication date |
|---|---|---|---|---|---|
| US 5719580 | A | 17-02-1998 | DE | 19723893 A1 | 11-12-1997 |
| | | | GB | 2313970 A | 10-12-1997 |
| | | | JP | 2937947 B2 | 23-08-1999 |
| | | | JP | H1062519 A | 06-03-1998 |
| | | | US | 5719580 A | 17-02-1998 |

EPO FORM P0459

For more details about this annex : see Official Journal of the European Patent Office, No. 12/82